# EUROPEAN PATENT APPLICATION

(11) **EP 4 779 573 A1**
(43) Date of publication of application: **22.07.2026**
(21) Application number: 25152279.3
(22) Date of filing: 16.01.2025
(51) Int. Cl.: G06T 15/20

(54) **METHOD AND SYSTEM FOR ENCODING VIEW OF ANATOMICAL STRUCTURE**

(71) Applicant: Koninklijke Philips N.V., 5656 AE Eindhoven (NL)
(72) Inventor: SCHULZ, Heinrich, Eindhoven (NL); PETERS, Jochen, Eindhoven (NL); WEBER, Frank Michael, 5656 AG Eindhoven (NL); WAECHTER-STEHLE, Irina, Eindhoven (NL); WILD, Sebastian, Eindhoven (NL); PRATER, David, Eindhoven (NL); DOW, Alasdair Iain, Eindhoven (NL)
(74) Representative: Philips Intellectual Property & Standards

(57) **Abstract**

A system and method for encoding a user-defined view of an anatomical structure in an anatomical model. A predefined anatomical model of an anatomical model is obtained, and a user input indicating a desired view of the anatomical structure is received. A subset of surface elements of the predefined anatomical model defining a plane corresponding to the desired view of the anatomical structure is identified, and an association between the subset of surface elements and the desired view of the anatomical structure is encoded in the predefined anatomical model.

## Description

### FIELD OF THE INVENTION

The invention relates to the field of medical imaging.

### BACKGROUND OF THE INVENTION

Clinical assessments carried out using medical imaging data are typically performed on standardized views, which are defined by clinical guidelines to facilitate accuracy and reproducibility. For example, in the case of a cardiac ultrasound examination, standardized views include "Parasternal Long Axis" (PLAX) and "Apical 4 Chamber" (A4C). Each standardized view is defined by one or more anatomical landmarks.

In order to assist clinicians in performing clinical assessments, standardized views have been encoded into anatomical models. This enables a standardized view to be mapped to medical imaging data automatically.

### SUMMARY OF THE INVENTION

The invention is defined by the claims.

According to examples in accordance with an aspect of the invention, there is provided a computer-implemented method for encoding a user-defined view of an anatomical structure in an anatomical model, the computer-implemented method comprising: obtaining a predefined anatomical model for an anatomical structure, wherein the anatomical model is defined by a plurality of surface elements; receiving a user input indicating a desired view of the anatomical structure; identifying a first subset of surface elements that define a plane corresponding to the desired view of the anatomical structure; and encoding, in the predefined anatomical model, an association between the first subset of surface elements and the desired view of the anatomical structure.

The inventors have recognized that it would be advantageous to encode user-defined views into anatomical models. Clinicians sometimes wish to manipulate standardized views and/or create additional views, depending on their preferences and on clinical needs. However, a clinician who has modified a standardized view in a display of imaging data cannot automatically reproduce this modified view at a later point in time or automatically generate an equivalent view from new imaging data (i.e. a new acquisition for the same subject or an acquisition for a different subject). Encoding the modified view into an anatomical model enables the modified view to be reproduced and/or applied to new imaging data.

In some examples, the computer-implemented method further comprises: obtaining first 3D imaging data of an anatomical structure of a first subject, wherein the anatomical structure of the first subject corresponds to the anatomical structure of the predefined anatomical model; identifying a correspondence between the plurality of surface elements and a plurality of anatomical features in the first 3D imaging data; processing the first 3D imaging data to generate an initial view of the anatomical structure of the first subject; and controlling a display device to display the initial view of the anatomical structure of the first subject; and the user input indicating a desired view of the anatomical structure is a user input indicating a desired modification to the initial view.

In other words, the desired view may be defined using imaging data of the anatomical structure.

In some examples, the first subset of surface elements is identified by: modifying the initial view of the anatomical structure, based on the user input, to generate a modified view of the anatomical structure of the first subject, wherein the modified view corresponds to the desired view; identifying one or more anatomical landmarks of the anatomical structure in the modified view of the anatomical structure; and identifying, for each identified anatomical landmark, any surface element corresponding to the anatomical landmark as being included in the first subset.

An anatomical landmark of the anatomical structure may be associated with one or more surface elements of the predefined anatomical model. By identifying one or more anatomical landmarks in the desired view, the identification of the first subset of surface elements, and thus the encoding of the desired view in the predefined anatomical model, is connected to specific anatomical landmarks. In this way, a view of the one or more anatomical landmarks may be produced using other 3D imaging data (e.g. further imaging data for the first subject and/or imaging data for other subjects).

In some examples, the computer-implemented method further comprises: defining an orientation of the plane corresponding to the desired view with respect to the predefined anatomical model; and encoding, into the predefined anatomical model, an identification of the orientation of the plane with respect to the predefined anatomical model.

In some examples, the computer-implemented method further comprises: obtaining further 3D imaging data of the anatomical structure of the first subject; obtaining the predefined anatomical model for the anatomical structure into which the association between the first subset of surface elements and the desired view of the anatomical structure has been encoded; identifying a correspondence between the plurality of surface elements and a plurality of anatomical features in the further 3D imaging data; processing the further 3D imaging data, using the identified correspondence between the plurality of surface elements and the plurality of anatomical features in the further 3D imaging data, to generate a further view of the anatomical structure, wherein the further view of the anatomical structure corresponds to the plane defined by the first subset of surface elements; and controlling a display device to display the further view of the anatomical structure.

In some examples, the computer-implemented method further comprises: processing the predefined anatomical model to generate an initial visualization of the predefined anatomical model; and controlling a display device to display the initial visualization of the anatomical model; and the user input indicating a desired view of the anatomical structure is a user input indicating a desired modification to the initial visualization.

In other words, the user-defined view may be defined in model space rather than image space.

In some examples, the computer-implemented method further comprises: obtaining second 3D imaging data of an anatomical structure of a second subject, wherein the anatomical structure of the second subject corresponds to the anatomical structure of the predefined anatomical model; obtaining the predefined anatomical model for the anatomical structure into which the association between the first subset of surface elements and the desired view of the anatomical structure has been encoded; identifying a correspondence between the plurality of surface elements and a plurality of anatomical features in the second 3D imaging data; processing the second 3D imaging data, using the identified correspondence between the plurality of surface elements and the plurality of anatomical features in the second 3D imaging data, to generate a view of the anatomical structure of the second subject, wherein the view of the anatomical structure of the second subject is generated based on the first subset of surface elements; and controlling a display device to display the view of the anatomical structure of the second subject.

In some examples, the view of the anatomical structure of the second subject is generated by: using the identified correspondence between the plurality of surface elements and the plurality of anatomical features in the second 3D imaging data to identify, for each surface element in the first subset, an anatomical feature in the second 3D imaging data corresponding to the surface element; and using the anatomical features in the second 3D imaging data corresponding to surface elements in the first subset to define a plane in the second 3D imaging data.

This recognizes that the first subset of surface elements may not be co-planar in the second modified anatomical model. For instance, the center position of the anatomical features corresponding to the first subset may be used to define the plane in the second 3D imaging data.

In some examples, the computer-implemented method further comprises: generating a visualization of the first subset of surface elements within the predefined anatomical model; controlling a display device to display the visualization of the first subset of surface elements; and in response to receiving a user input indicating a desired modification to the displayed visualization of the first subset of surface elements, redefining the first subset of surface elements based on the user input indicating the desired modification to the displayed visualization of the first subset of surface elements.

In some examples, the computer-implemented method further comprises identifying a third subset of surface elements for a third subject by: obtaining third 3D imaging data of an anatomical structure of the third subject, wherein the anatomical structure of the third subject corresponds to the anatomical structure of the predefined anatomical model; identifying a correspondence between the plurality of surface elements and a plurality of anatomical features in the third 3D imaging data; processing the third 3D imaging data to generate an initial view of the anatomical structure of the third subject; controlling a display device to display the initial view of the anatomical structure of the third subject; receiving a user input indicating a desired modification to the initial view of the anatomical structure of the third subject; modifying the initial view of the anatomical structure of the third subject, based on the user input, to generate a modified view of the anatomical structure of the third subject; and identifying a third subset of surface elements that define a plane corresponding to the modified view of the anatomical structure of the third subject.

In some examples, the computer-implemented method further comprises: identifying a further subset of surface elements based on the first subset of surface elements and the third subset of surface elements; and encoding, into the predefined anatomical model, an association between the further subset of surface elements and the modified view of the anatomical structure.

For instance, the further subset of surface elements may include only surface elements that are included in both the first subset and the third subset.

In some examples, the computer-implemented method further comprises: iteratively repeating the process of identifying a third subset of surface elements for a third subject, wherein each iteration of the process is performed for a different third subject; identifying a further subset of surface elements based on the first subset of surface elements and each third subset of surface elements; and encoding, into the predefined anatomical model, an association between the further subset of surface elements and the modified view of the anatomical structure.

In some examples, the computer-implemented method further comprises: obtaining fourth 3D imaging data of an anatomical structure of a fourth subject, wherein the anatomical structure of the fourth subject corresponds to the anatomical structure of the predefined anatomical model; obtaining the predefined anatomical model for the anatomical structure into which the association between the further subset of surface elements and the modified view of the anatomical structure has been encoded; identifying a correspondence between the plurality of surface elements and a plurality of anatomical features in the fourth 3D imaging data; processing the fourth 3D imaging data, using the identified correspondence between the plurality of surface elements and the plurality of anatomical features in the fourth 3D imaging data, to generate a view of the anatomical structure of the fourth subject, wherein the view of the anatomical structure of the fourth subject is generated based on the further subset of surface elements; and controlling a display device to display the view of the anatomical structure of the fourth subject.

There is also provided a computer program product comprising computer program code means which, when executed on a computing device having a processing system, cause the processing system to perform all of the steps of any method described above.

According to examples in accordance with an aspect of the invention, there is provided a processing system for encoding a user-defined view of an anatomical structure in an anatomical model, the processing system being configured to: obtain a predefined anatomical model for an anatomical structure, wherein the anatomical model is defined by a plurality of surface elements; receive a user input indicating a desired view of the anatomical structure; identify a first subset of surface elements that define a plane corresponding to the desired view of the anatomical structure; and encode, in the predefined anatomical model, an association between the first subset of surface elements and the desired view of the anatomical structure.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a system for encoding a user-defined view of an anatomical structure in an anatomical model, according to an embodiment of the invention;
Fig. 2 illustrates an initial visualization of a predefined anatomical model of a heart;
Fig. 3 illustrates a modified visualization of the predefined anatomical model of the heart;
Fig. 4 illustrates a predefined anatomical model with a first subset of surface elements defining a plane corresponding to a user-defined view; and
Fig. 5 illustrates a computer-implemented method for encoding a user-defined view of an anatomical structure in an anatomical model, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system and method for encoding a user-defined view of an anatomical structure in an anatomical model. A predefined anatomical model of an anatomical model is obtained, and a user input indicating a desired view of the anatomical structure is received. A subset of surface elements of the predefined anatomical model defining a plane corresponding to the desired view of the anatomical structure is identified, and an association between the subset of surface elements and the desired view of the anatomical structure is encoded in the predefined anatomical model.

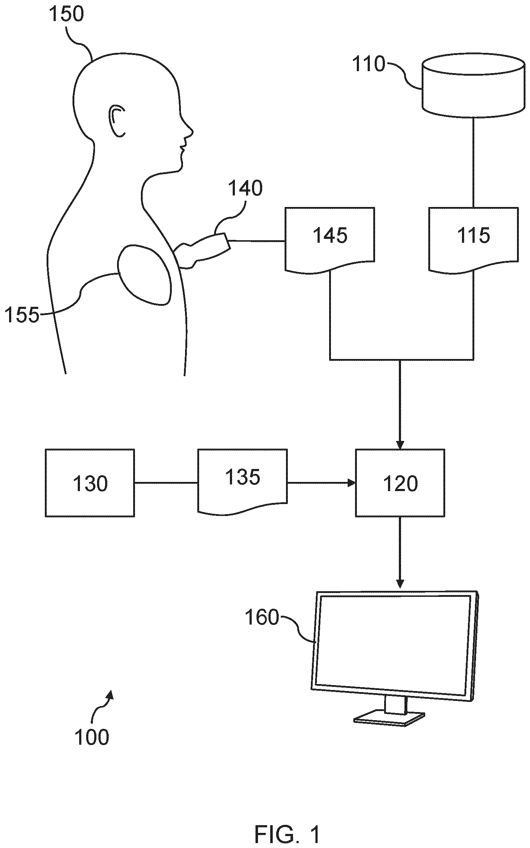

Fig. 1 illustrates a system 100 for encoding a user-defined view of an anatomical structure in an anatomical model, according to an embodiment of the invention. The system 100 comprises a memory unit 110, a processing system 120, and a user input device 130.

The memory unit 110 is configured to store a predefined anatomical model 115 for an anatomical structure. The predefined anatomical model is defined by a plurality of surface elements that together represent the anatomical structure; for instance, the predefined anatomical model may be a mesh surface (e.g. a triangular mesh surface), and the surface elements may be vertices or shape elements (e.g. triangles) defining the mesh surface. Each surface element of the predefined anatomical model has a predefined anatomical meaning. The predefined anatomical model may, for example, be a mean geometric model of the anatomical structure based on imaging data of the anatomical structure for a large number of subjects. The predefined anatomical model may have been generated using any suitable technique; for instance, the predefined anatomical model may be an active surface model or an anatomical model generated using a neural network.

The anatomical structure represented by the anatomical model may be an organ (or part of an organ) or another body part of a human or animal. In some examples, the memory unit 110 may store a plurality of predefined anatomical models, each predefined anatomical model representing a different anatomical structure.

The processing system 120 is configured to obtain the predefined anatomical model 115 from the memory unit 110.

In some examples, the system 100 may further comprise a medical imaging device 140 configured to acquire first 3D imaging data 145 of an anatomical structure 155 of a first subject 150, and the processing system 120 may be configured to obtain the first 3D imaging data (either directly from the medical imaging device or from another source storing the first 3D imaging data). The predefined anatomical model 115 obtained from the memory unit 110 may then be a predefined anatomical model for the anatomical structure captured by the first 3D imaging data.

In Fig. 1, the medical imaging device 140 is an ultrasound imaging device, and the anatomical structure 155 is a heart (and thus the first 3D imaging data 145 is cardiac ultrasound imaging data). However, it should be understood that the first 3D imaging data may be acquired using any medical imaging modality; for instance, the first 3D imaging data may be computed tomography (CT) imaging data or magnetic resonance imaging (MRI) data.

In other examples, the predefined anatomical model may be selected based on a user input indicating the anatomical structure for which the user wishes to define a view (for instance, where a plurality of predefined anatomical models are stored in the memory unit 110, a user may be presented with a list of the anatomical structures represented by the plurality of predefined anatomical models, and may select an anatomical structure from the list).

The processing system 120 is configured to receive, via the user input device 130, a user input 135 indicating a desired view of the anatomical structure. In some examples, the system 100 may further comprise a display device 160, and a user may indicate a desired view of the anatomical structure by indicating a desired modification to an image displayed by the display device.

For instance, in examples in which first 3D imaging data 145 of an anatomical structure 155 of a first subject 150 has been obtained, the processing system 120 may be configured to identify a correspondence between the plurality of surface elements and a plurality of anatomical features in the first 3D imaging data, process the first 3D imaging data to generate an initial view of the anatomical structure of the first subject, and control the display device 160 to display the initial view of the anatomical structure of the first subject. The user input 135 may then be a user input indicating a desired modification to the initial view of the anatomical structure of the first subject. The correspondence between the plurality of surface elements and the plurality of anatomical features in the first 3D imaging data may be identified using a segmentation algorithm to identify anatomical features in the first 3D imaging data. Each identified anatomical feature in the first 3D imaging data is identified as corresponding to a surface element for which the predefined anatomical meaning corresponds to the identified anatomical feature. For instance, in the case of a predefined anatomical model of the heart, a first surface element may correspond to the apex of the heart; the identified apex of the heart in the first 3D imaging data is then identified as corresponding to the first surface element.

In some examples, the identified correspondence between the plurality of surface elements and the plurality of anatomical features in the first 3D imaging data may be used to generate the initial view of the anatomical structure. For instance, one or more predefined views may be encoded in the anatomical model, and the correspondence between the plurality of surface elements and the plurality of anatomical features in the first 3D imaging data may be used to generate an initial view corresponding to one of the one or more predefined views.

In other examples, the processing system 120 may be configured to process the predefined anatomical model 115 to generate an initial visualization of the predefined anatomical model, and control the display device 160 to display the initial visualization of the predefined anatomical model. The user input 135 may then be a user input indicating a desired modification to the initial visualization.

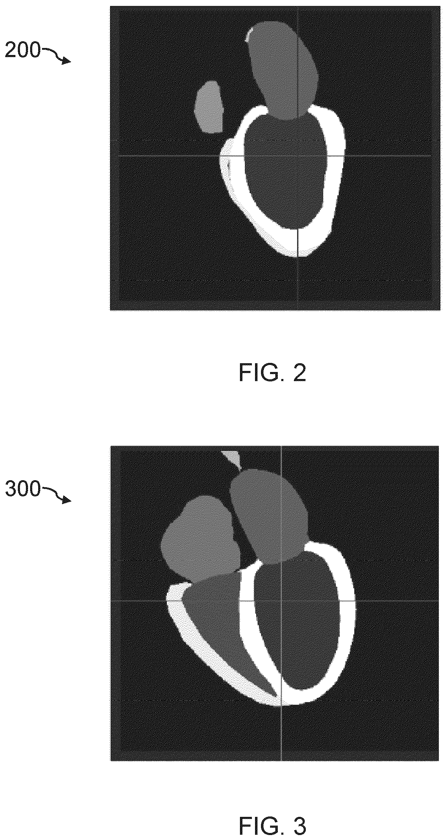

An example of this is illustrated by Figs. 2 and 3. Fig. 2 illustrates an initial visualization 200 of a predefined anatomical model of a heart. Fig. 3 illustrates a modified visualization 300 of the predefined anatomical model of the heart. The modified visualization has been generated by modifying the initial visualization based on a user input indicating a desired modification to the initial visualization.

Returning to Fig. 1, having received the user input 135, the processing system 120 is configured to identify a first subset of surface elements that define a plane corresponding to the desired view of the anatomical structure.

In examples, in which the user input 135 is a desired modification to a displayed initial visualization of the predefined anatomical model itself, the first subset of surface elements may by identified by modifying the initial visualization according to the desired modification to generate a modified visualization. The first subset of surface elements may then comprise any surface elements that are present in the modified visualization.

In examples in which first 3D imaging data 145 of an anatomical structure 155 of a first subject 150 has been obtained, the processing system 120 may be configured to identify the subset of surface elements by modifying the initial view of the anatomical structure, based on the user input 135, to generate a modified view of the subject corresponding to the desired view. The processing system 120 may then be configured to identify one or more anatomical landmarks of the anatomical structure in the modified view. The identification of the one or more anatomical landmarks in the modified view may be based on segmentation performed to identify the correspondence between the plurality of surface elements and the plurality of anatomical features in the first 3D imaging data. For each identified anatomical landmark, any surface element corresponding to the anatomical landmark (according to the identified correspondence between the plurality of surface elements and the plurality of anatomical features in the first 3D imaging data) is included in the first subset. The identified one or more anatomical landmarks may each correspond to a single surface element or to a plurality of surface elements.

In some examples, the plane corresponding to the desired view of the anatomical structure may be defined by an identification of the orientation of the plane corresponding to the desired view with respect to the anatomical model (i.e. an angle of the plane with respect to a plane defining the orientation of the anatomical model). In other words, the plane corresponding to the desired view may be defined by at least three surface elements, or by at least one surface element and an indication of the orientation of the plane. The orientation of the plane may, for example, be determined using a known orientation of the initial view of the anatomical structure with respect to the predefined anatomical model, and the desired modification to the initial view (in particular, an angle change of the desired modification). Alternatively, the orientation of the plane may be defined based on a separate user input identifying the orientation of the plane. In some examples, the indication of orientation of the plane may comprise an identification of a surface element that defines the orientation of the plane (for instance, a surface element that is parallel to the plane).

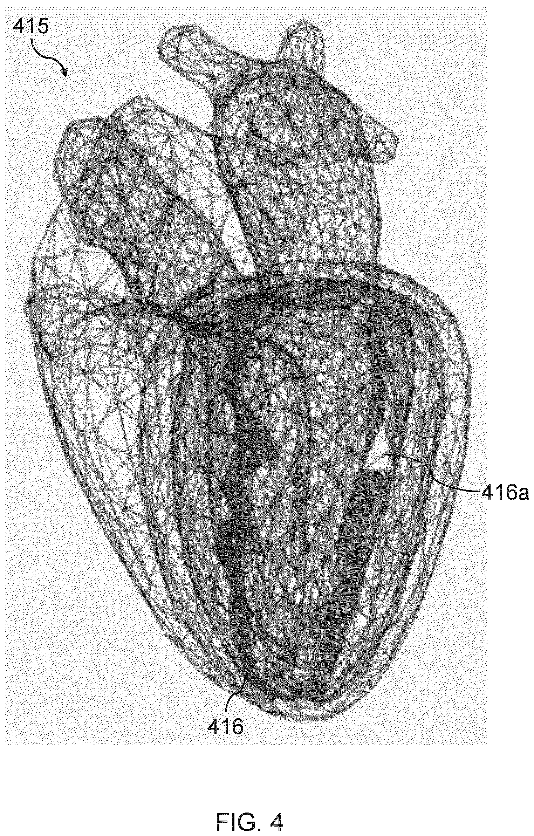

Fig. 4 illustrates a predefined anatomical model 415 with a first subset of surface elements 416 defining a plane corresponding to a user-defined view. The first subset of surface elements 416 is shaded in Fig. 4. A reference surface element 416a defines the orientation of the plane.

In Fig. 4, all surface elements forming the plane corresponding to the user-defined view are included in the first subset; however, it is to be understood that, in some examples, fewer surface elements may be included in the first subset (i.e. at least three surface elements, or at least one surface element if an indication of orientation is also identified). A greater number of surface elements in the first subset provides a more stable and robust definition of the user-defined view; however, a greater number of surface elements also increases a likelihood that the anatomical landmarks corresponding to the surface elements are not coplanar in imaging data for all subjects, as described below in more detail.

Returning to Fig. 1, the processing system 120 is configured to encode, in the predefined anatomical model, an association between the first subset of surface elements and the desired view of the anatomical structure. In other words, an identification of the first subset of surface elements is stored alongside the predefined anatomical model (e.g. in the memory unit 110) as defining the desired view. In examples in which an orientation of the plane corresponding to the desired view is defined, an indication of the orientation of the plane may also be encoded in the predefined anatomical model (for example, by encoding an identification of a surface element as defining the orientation of the plane).

In some examples, the processing system 120 may be further configured generate a visualization of the first subset of surface elements within the predefined anatomical model, and to control the display device to display the visualization of the first subset of surface elements. This enables a user to confirm that the first subset of surface elements define the view that the user wishes to encode in the anatomical model, and to make any modifications to the view being encoded in the anatomical model. For instance, the user may provide a user input indicating a desired modification to the displayed visualization of the first subset of surface elements. In response to receiving a user input indicating a desired modification to the displayed visualization of the first subset of surface elements, the processing system may be configured to redefine the first subset of surface elements based on the user input indicating the desired modification to the displayed visualization of the first subset of surface elements. The first subset of surface elements encoded in the predefined anatomical model as defining the user-defined view may then be the redefined first subset of surface elements. Any suitable visualization may be used; for instance the visualization may comprise a visualization of a mesh structure of the predefined anatomical model with shading used to indicate surface elements belonging to the first subset, as in Fig. 4.

In some examples in which the user-defined view was obtained using first 3D imaging data 145 of an anatomical structure 155 of a first subject 150, the processing system 120 may be further configured to use the encoded user-defined view to generate a view of further 3D imaging data of the first subject. The processing system may be configured to obtain further 3D imaging data of the anatomical structure of the first subject and obtain the predefined anatomical model for the anatomical structure into which the association between the first subset of surface elements and the desired view of the anatomical structure has been encoded. The further 3D imaging data may have been acquired using the same imaging modality as the first 3D imaging data 145, or using any other imaging modality for which mapping to the predefined anatomical model is possible.

The processing system 120 may be configured to identify a correspondence between the plurality of surface elements and a plurality of anatomical features in the further 3D imaging data (as described above with respect to the first 3D imaging data), and to process the further 3D imaging data, using the identified correspondence between the plurality of surface elements and the plurality of anatomical features in the further 3D imaging data, to generate a further view of the anatomical structure. The further view of the anatomical structure corresponds to the plane defined by the first subset of surface elements. In other words, the anatomical features in the further 3D imaging data identified as corresponding to the first subset of surface elements are visible in the further view of the anatomical structure. The processing system may then be configured to control the display device 160 to display the further view of the anatomical structure. In this way, a clinician may generate the same user-defined view of the anatomical structure of the first subject over multiple imaging procedures, enabling comparisons between images of the anatomical structure over time.

In some examples, the processing system 120 may be further configured to use the encoded user-defined view to generate a view of 3D imaging data of other subjects. For instance, the processing system may be configured to obtain second 3D imaging data of an anatomical structure of a second subject corresponding to the anatomical structure represented by the predefined anatomical model, and to obtain the predefined anatomical model for the anatomical structure into which the association between the first subset of surface elements and the desired view of the anatomical structure has been encoded. The second 3D imaging data may have been acquired using the same imaging modality as the first 3D imaging data 145, or using any other imaging modality for which mapping to the predefined anatomical model is possible.

The processing system 120 may be configured to identify a correspondence between the plurality of surface elements and a plurality of anatomical features in the second 3D imaging data (as described above with respect to the first 3D imaging data), and to process the second 3D imaging data, using the identified correspondence between the plurality of surface elements and the plurality of anatomical features in the second 3D imaging data, to generate a view of the anatomical structure of the second subject. Having generated the view of the anatomical structure of the second subject, the processing system may be configured to control the display device 160 to display the view of the anatomical structure of the second subject.

The view of the anatomical structure of the second subject may correspond to the plane defined by the first subset of surface elements. In some examples, the anatomical features in the second 3D imaging data identified as corresponding to the surface elements belonging to the first subset may not be coplanar. Thus, the view of the anatomical structure of the second subject may be generated by using the identified correspondence between the plurality of surface elements and the plurality of anatomical features in the second 3D imaging data to identify, for each surface element in the first subset, an anatomical feature in the second 3D imaging data corresponding to the surface element. The anatomical features in the second 3D imaging data corresponding to surface elements in the first subset may then be used to define a plane in the second 3D imaging data, and the defined plane may be used to generate the view of the anatomical structure of the second subject. The plane may, for example, be defined using the center position of the anatomical features corresponding to surface elements in the first subset.

The skilled person will readily appreciate that using the encoded user-defined view to generate a view of further 3D imaging data of the first subject and/or 3D imaging data of other subjects may additionally or alternatively be performed by another processing system configured to obtain the predefined anatomical model for the anatomical structure into which the association between the first subset of surface elements and the desired view of the anatomical structure has been encoded.

In some examples, the user-defined view encoded in the predefined anatomical model may be defined using imaging data from more than one subject. For instance, the processing system 120 may be configured to obtain third 3D imaging data of an anatomical structure of a third subject corresponding to the anatomical structure represented by the predefined anatomical model, and to identify a correspondence between the plurality of surface elements and a plurality of anatomical features in the third 3D imaging data (as described above with respect to the first 3D imaging data). The processing system may then be configured to process the third 3D imaging data to generate an initial view of the anatomical structure of the third subject. The initial view of the anatomical structure of the third subject may be a standardized view (e.g. a predefined view encoded in the predefined anatomical model) or a view corresponding to the desired view associated with the first subset of surface elements (i.e. the initial view of the anatomical structure of the third subject may be generated by obtaining the predefined anatomical model for the anatomical structure into which the association between the first subset of surface elements and the desired view of the anatomical structure has been encoded and generating an initial view of the anatomical structure of the third subject as described above with reference to the second subject).

The processing system 120 may be configured to control the display device 160 to display the initial view of the anatomical structure of the third subject, and to receive a user input indicating a desired modification to the initial view of the anatomical structure of the third subject. The processing system may then be configured to modify the initial view of the anatomical structure of the third subject, based on the user input, to generate a modified view of the anatomical structure of the third subject, and to identify a third subset of surface elements that define a plane corresponding to the modified view of the anatomical structure of the third subject. The third subset of surface elements may be identified as described above with reference to the first subset of surface elements. It is to be understood that the expression "third subset of surface elements" is used to indicate that the subset of surface elements is identified based on 3D imaging data for the third subject, and does not necessarily indicate the presence of a second subset of surface elements.

The first subset and third subset of surface elements may be used to identify a further subset of surface elements. An association between the further subset of surface elements and the modified view of the anatomical structure may then be encoded in the predefined anatomical model. In some examples, this may replace the association between the first subset of surface elements and the desired view of the anatomical structure; in other words, the modified view may be encoded as a modification of the desired view. In other examples, the modified view may be encoded as a new user-defined view.

In some examples, the further subset of surface elements may be identified using an iterative process. A third subset of surface elements may be identified for each of a plurality of third subjects using the method described above. In some examples, the initial view for each third subject may be determined by modifying the encoded desired view in the previous iteration, and generating the initial view using the modified encoded desired view. Alternatively, the same predefined view or the view defined by the first subset of surface elements may be used to determine the initial view in each iteration.

The further subset of surface elements may be identified based on the first subset of surface elements and each third subset of surface elements. For instance, the further subset of surface elements may comprise only surface elements that are included in a predefined number of the subsets of surface elements used to identify the further subset. In some examples, each surface element in the further subset may be assigned a weight according to the number of subsets used to identify the further subset in which the respective surface element is included (such that a surface element that appears in more subsets is assigned a higher weight). The weight assigned to each surface element in the further subset may also be encoded in the predefined anatomical model. The weights may be used to adjust the impact of each surface element on defining a plane in imaging data corresponding to the modified view.

The modified view encoded in the predefined anatomical model may be used to generate a view of imaging data for other subjects in the same way as the encoded desired view comprising the association between the first subset of surface elements and the desired view of the anatomical structure. In other words, the processing system 120 may be configured to obtain fourth 3D imaging data of an anatomical structure of a fourth subject corresponding to the anatomical structure represented by the predefined anatomical model, and to obtain the predefined anatomical model for the anatomical structure into which the association between the further subset of surface elements and the modified view of the anatomical structure has been encoded. The fourth 3D imaging data may have been acquired using the same imaging modality as the first 3D imaging data 145 and/or third 3D imaging data, or using any other imaging modality for which mapping to the predefined anatomical model is possible.

The processing system 120 may be configured to identify a correspondence between the plurality of surface elements and a plurality of anatomical features in the fourth 3D imaging data (as described above with respect to the first 3D imaging data), and to process the fourth 3D imaging data, using the identified correspondence between the plurality of surface elements and the plurality of anatomical features in the fourth 3D imaging data, to generate a view of the anatomical structure of the fourth subject. Having generated the view of the anatomical structure of the fourth subject, the processing system may be configured to control the display device 160 to display the view of the anatomical structure of the fourth subject.

The view of the anatomical structure of the fourth subject may correspond to a plane defined by the further subset of surface elements. In some examples, the anatomical features in the fourth 3D imaging data identified as corresponding to the surface elements belonging to the further subset may not be coplanar. Thus, the view of the anatomical structure of the fourth subject may be generated by using the identified correspondence between the plurality of surface elements and the plurality of anatomical features in the fourth 3D imaging data to identify, for each surface element in the further subset, an anatomical feature in the fourth 3D imaging data corresponding to the surface element, and using these anatomical features to define a plane in the fourth 3D imaging data, as described above with reference to the second subject. Additionally or alternatively, if a weight assigned to each surface element is encoded in the predefined anatomical model, the weight assigned to each surface element may be used to define the plane, with a surface element having a higher weight having a greater impact on the plane definition. The defined plane may then be used to generate the view of the anatomical structure of the fourth subject.

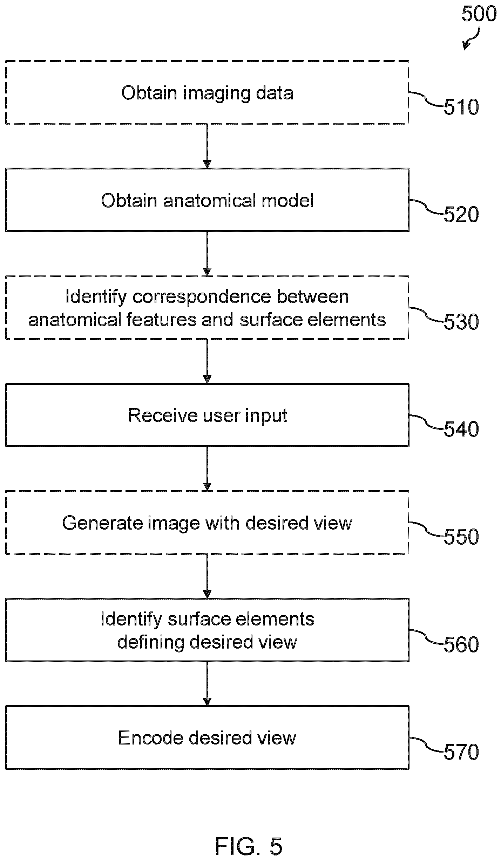

Fig. 5 illustrates a computer-implemented method 500 for encoding a user-defined view of an anatomical structure in an anatomical model, according to an embodiment of the invention.

At step 520, a predefined anatomical model for an anatomical structure is obtained. The anatomical model is defined by a plurality of surface elements.

In some examples, the step 520 may be preceded by a step 510 of obtaining first 3D imaging data of an anatomical structure of a first subject, and followed by a step 530 of identifying a correspondence between the plurality of surface elements that define the anatomical model and a plurality of anatomical features of the anatomical structure. The predefined anatomical model obtained in step 520 may then be a predefined anatomical model for the anatomical structure captured by the 3D imaging data.

At step 540, a user input indicating a desired view of the anatomical structure is obtained. In some examples, the user input may be obtained by processing the first 3D imaging data to generate an initial view of the anatomical structure of the first subject and controlling a display device to display the initial view of the anatomical structure of the first subject, and the user input may indicate a desired modification to the initial view. Alternatively, the user input may be obtained by processing the predefined anatomical model to generate an initial visualization of the predefined anatomical model and controlling a display device to display the initial visualization of the anatomical model, and the user input may indicate a desired modification to the initial visualization.

At step 560, a first subset of surface elements is identified. The first subset of surface elements defines a plane corresponding to the desired view of the anatomical structure. In some examples in which the desired view is defined by a user input indicating a desired modification to the initial view of the anatomical structure of the first subject, step 560 may be preceded by step 550, in which the initial view of the anatomical structure is modified based on the user input to generate a modified view of the anatomical structure corresponding to the desired view. Any surface elements corresponding to anatomical features that are identified in the modified view may then be included in the first subset.

At step 570, an association between the first subset of surface elements and the desired view of the anatomical structure is encoded in the predefined anatomical model.

It will be understood that the disclosed methods are computer-implemented methods. As such, there is also proposed a concept of a computer program comprising code means for implementing any described method when said program is run on a processing system.

The skilled person would be readily capable of developing a processing system for carrying out any herein described method. Thus, each step of a flow chart may represent a different action performed by a processing system, and may be performed by a respective module of the processing system.

As discussed above, the system makes use of a processing system to perform the data processing. The processing system can be implemented in numerous ways, with software and/or hardware, to perform the various functions required. The processing system typically employs one or more microprocessors that may be programmed using software (e.g. microcode) to perform the required functions. The processing system may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processing system may be associated with one or more storage media such as volatile and non-volatile computer memory such as RAM, PROM, EPROM, and EEPROM. The storage media may be encoded with one or more programs that, when executed on one or more processing systems and/or controllers, perform the required functions. Various storage media may be fixed within a processing system or controller may be transportable, such that the one or more programs stored thereon can be loaded into a processing system.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processing system may be implemented by a single processing system or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A computer-implemented method (500) for encoding a user-defined view of an anatomical structure in an anatomical model, the computer-implemented method comprising:
obtaining a predefined anatomical model (115, 415) for an anatomical structure, wherein the anatomical model is defined by a plurality of surface elements;
receiving a user input (135) indicating a desired view of the anatomical structure;
identifying a first subset of surface elements (416) that define a plane corresponding to the desired view of the anatomical structure; and
encoding, in the predefined anatomical model, an association between the first subset of surface elements and the desired view of the anatomical structure.

2. The computer-implemented method (500) of claim 1, wherein:
the computer-implemented method further comprises:
obtaining first 3D imaging data (145) of an anatomical structure (155) of a first subject (150), wherein the anatomical structure of the first subject corresponds to the anatomical structure of the predefined anatomical model (115, 415);
identifying a correspondence between the plurality of surface elements and a plurality of anatomical features in the first 3D imaging data;
processing the first 3D imaging data to generate an initial view of the anatomical structure of the first subject; and
controlling a display device (160) to display the initial view of the anatomical structure of the first subject; and
the user input (135) indicating a desired view of the anatomical structure is a user input indicating a desired modification to the initial view.

3. The computer-implemented method (500) of claim 2, wherein the first subset of surface elements (416) is identified by:
modifying the initial view of the anatomical structure, based on the user input (135), to generate a modified view of the anatomical structure of the first subject, wherein the modified view corresponds to the desired view;
identifying one or more anatomical landmarks of the anatomical structure in the modified view of the anatomical structure; and
identifying, for each identified anatomical landmark, any surface element corresponding to the anatomical landmark as being included in the first subset.

4. The computer-implemented method (500) of claim 2 or 3, wherein the computer-implemented method further comprises:
defining an orientation of the plane corresponding to the desired view with respect to the predefined anatomical model (115, 415); and
encoding, into the predefined anatomical model, an identification of the orientation of the plane with respect to the predefined anatomical model.

5. The computer-implemented method (500) of any of claims 2 to 4, wherein the computer-implemented method further comprises:
obtaining further 3D imaging data of the anatomical structure (155) of the first subject (150);
obtaining the predefined anatomical model for the anatomical structure into which the association between the first subset of surface elements (416) and the desired view of the anatomical structure has been encoded;
identifying a correspondence between the plurality of surface elements and a plurality of anatomical features in the further 3D imaging data;
processing the further 3D imaging data, using the identified correspondence between the plurality of surface elements and the plurality of anatomical features in the further 3D imaging data, to generate a further view of the anatomical structure, wherein the further view of the anatomical structure corresponds to the plane defined by the first subset of surface elements; and
controlling a display device (160) to display the further view of the anatomical structure.

6. The computer-implemented method (500) of claim 1, wherein:
the computer-implemented method further comprises:
processing the predefined anatomical model (115, 415) to generate an initial visualization (200) of the predefined anatomical model; and
controlling a display device (160) to display the initial visualization of the anatomical model; and
the user input (135) indicating a desired view of the anatomical structure is a user input indicating a desired modification to the initial visualization.

7. The computer-implemented method (500) of any of claims 1 to 6, wherein the computer-implemented method further comprises:
obtaining second 3D imaging data of an anatomical structure of a second subject, wherein the anatomical structure of the second subject corresponds to the anatomical structure of the predefined anatomical model (115, 415);
obtaining the predefined anatomical model for the anatomical structure into which the association between the first subset of surface elements (416) and the desired view of the anatomical structure has been encoded;
identifying a correspondence between the plurality of surface elements and a plurality of anatomical features in the second 3D imaging data;
processing the second 3D imaging data, using the identified correspondence between the plurality of surface elements and the plurality of anatomical features in the second 3D imaging data, to generate a view of the anatomical structure of the second subject, wherein the view of the anatomical structure of the second subject is generated based on the first subset of surface elements; and
controlling a display device (160) to display the view of the anatomical structure of the second subject.

8. The computer-implemented method (500) of claim 7, wherein the view of the anatomical structure of the second subject is generated by:
using the identified correspondence between the plurality of surface elements and the plurality of anatomical features in the second 3D imaging data to identify, for each surface element in the first subset (416), an anatomical feature in the second 3D imaging data corresponding to the surface element; and
using the anatomical features in the second 3D imaging data corresponding to surface elements in the first subset to define a plane in the second 3D imaging data.

9. The computer-implemented method (500) of any of claims 1 to 8, wherein the computer-implemented method further comprises:
generating a visualization of the first subset of surface elements (416) within the predefined anatomical model (115, 415);
controlling a display device (160) to display the visualization of the first subset of surface elements; and
in response to receiving a user input indicating a desired modification to the displayed visualization of the first subset of surface elements, redefining the first subset of surface elements based on the user input indicating the desired modification to the displayed visualization of the first subset of surface elements.

10. The computer-implemented method (500) of any of claims 1 to 9, wherein the computer-implemented method further comprises identifying a third subset of surface elements for a third subject by:
obtaining third 3D imaging data of an anatomical structure of the third subject, wherein the anatomical structure of the third subject corresponds to the anatomical structure of the predefined anatomical model (115, 415);
identifying a correspondence between the plurality of surface elements and a plurality of anatomical features in the third 3D imaging data;
processing the third 3D imaging data to generate an initial view of the anatomical structure of the third subject;
controlling a display device to display the initial view of the anatomical structure of the third subject;
receiving a user input indicating a desired modification to the initial view of the anatomical structure of the third subject;
modifying the initial view of the anatomical structure of the third subject, based on the user input, to generate a modified view of the anatomical structure of the third subject; and
identifying a third subset of surface elements that define a plane corresponding to the modified view of the anatomical structure of the third subject.

11. The computer-implemented method (500) of claim 10, wherein the computer-implemented method further comprises:
identifying a further subset of surface elements based on the first subset of surface elements (416) and the third subset of surface elements; and
encoding, into the predefined anatomical model (115, 415), an association between the further subset of surface elements and the modified view of the anatomical structure.

12. The computer-implemented method (500) of claim 10, wherein the computer-implemented method further comprises:
iteratively repeating the process of identifying a third subset of surface elements for a third subject, wherein each iteration of the process is performed for a different third subject;
identifying a further subset of surface elements based on the first subset of surface elements (416) and each third subset of surface elements; and
encoding, into the predefined anatomical model (115, 415), an association between the further subset of surface elements and the modified view of the anatomical structure.

13. The computer-implemented method (500) of any of claims 10 to 12, wherein the computer-implemented method further comprises:
obtaining fourth 3D imaging data of an anatomical structure of a fourth subject, wherein the anatomical structure of the fourth subject corresponds to the anatomical structure of the predefined anatomical model (115, 415);
obtaining the predefined anatomical model for the anatomical structure into which the association between the further subset of surface elements and the modified view of the anatomical structure has been encoded;
identifying a correspondence between the plurality of surface elements and a plurality of anatomical features in the fourth 3D imaging data;
processing the fourth 3D imaging data, using the identified correspondence between the plurality of surface elements and the plurality of anatomical features in the fourth 3D imaging data, to generate a view of the anatomical structure of the fourth subject, wherein the view of the anatomical structure of the fourth subject is generated based on the further subset of surface elements; and
controlling a display device (160) to display the view of the anatomical structure of the fourth subject.

14. A computer program product comprising computer program code means which, when executed on a computing device having a processing system, cause the processing system to perform all of the steps of the method (500) according to any one of claims 1 to 13.

15. A processing system (120) for encoding a user-defined view of an anatomical structure in an anatomical model, the processing system being configured to:
obtain a predefined anatomical model (115, 415) for an anatomical structure, wherein the anatomical model is defined by a plurality of surface elements;
receive a user input (135) indicating a desired view of the anatomical structure;
identify a first subset of surface elements (416) that define a plane corresponding to the desired view of the anatomical structure; and
encode, in the predefined anatomical model, an association between the first subset of surface elements and the desired view of the anatomical structure.
